# EUROPEAN PATENT APPLICATION

(11) **EP 4 520 231 A1**
(43) Date of publication of application: **12.03.2025**
(21) Application number: 23883875.9
(22) Date of filing: 01.12.2023
(51) Int. Cl.: A47J 42/12, A47J 42/18, A47J 42/40

(54) **COFFEE GRINDER CONTAINER, COFFEE GRINDER AND COFFEE MACHINE**

(30) Priority: 11.07.2023 CN 202310843285
(71) Applicant: Xu, Shi, Zhongshan, Guangdong 528400 (CN); Jiang, Jine, Zhongshan, Guangdong 528400 (CN)
(72) Inventor: Xu, Shi, Zhongshan, Guangdong 528400 (CN); Jiang, Jine, Zhongshan, Guangdong 528400 (CN)
(74) Representative: Chung, Hoi Kan
(86) International application number: PCT/CN2023/135754
(87) International publication number: WO 2025/010926

(57) **Abstract**

The present invention discloses a bean grinder container, a bean grinder, and a coffee machine, where the bean grinder container includes a cup body and a grinding disc, the grinding disc is of a hollow structure, a grinding rib is disposed on an inner wall of the grinding disc, a connection assembly is disposed below the cup body, the connection assembly is fixed below the cup body, and the grinding disc is fixedly connected to the connection assembly. The bean grinder includes a bean grinder main machine and the bean grinder container, and a lower portion of the bean grinder container is in butt joint with the bean grinder main machine and is detachably connected to the bean grinder main machine. The coffee machine includes the bean grinder.

## Description

### TECHNICAL FIELD

The present invention relates to the technical field of coffee bean grinding equipment, and in particular, to a bean grinder container, a bean grinder, and a coffee machine.

### BACKGROUND

A bean grinder can quickly process coffee beans into coffee powder, and then brew coffee meeting tastes of individual users. At present, there are several types of bean grinders on the market, all of which can effectively process coffee beans into coffee powder.

However, the existing bean grinders may have coffee powder remained inside the bean grinder, making it difficult to clean out the coffee powder. As a result, a part of coffee powder is always remained in the bean grinder, and it is likely to be remained for a long time, which causes a part of the coffee powder from a long time ago to be mixed in every time the powder is discharged, resulting in an impure taste. Therefore, cleaning of the bean grinder is always a technical problem to be solved by a person skilled in the art.

### SUMMARY

An objective of the present invention is to provide a bean grinder container, so as to solve a technical problem that the bean grinder is difficult to clean.

To achieve the foregoing objective, a technical solution used in the present invention is to provide a bean grinder container, including a cup body and a grinding disc, where the grinding disc is of a hollow structure, a grinding rib is disposed on an inner wall of the grinding disc, a connection assembly is disposed below the cup body, the connection assembly is fixed below the cup body, and the grinding disc is fixedly connected to the connection assembly.

According to the bean grinder container of the present invention, the connection assembly is disposed below the cup body, and the connection assembly fixes the grinding disc below the cup body, so that the grinding disc can be detached together when the bean grinder container is detached from the bean grinder main machine, and the grinding disc can be cleaned together when the bean grinder container is cleaned, thus facilitating cleaning and disassembly and assembly.

Preferably, the grinding disc is detachably connected to the connection assembly. The grinding disc may be fixed in the connection assembly, or may be detachably connected to the connection assembly. When the two are detachably connected, the grinding disc can be removed from the cup body for more thorough cleaning.

More preferably, the grinding disc is removed from the cup body from below. As the grinding disc is removed from the cup body from below, when the grinding disc is removed, excessive parts do not need to be additionally removed, which facilitates cleaning and assembly.

More preferably, a detachable handle is disposed below the grinding disc. The detachable handle enables the grinding disc to be easily removed from the cup body during removal, and it is not prone to hurt a hand due to sharp corners of the grinding disc.

Preferably, the connection assembly includes an adjusting mechanism, and the adjusting mechanism controls the grinding disc to move up and down relative to the cup body. The adjusting mechanism can control the grinding disc to move up and down, thereby adjusting the fineness of coffee powder. The adjusting mechanism is integrated on the cup body, so that when the bean grinder container is detached from the bean grinder main machine, there are few parts, and the bean grinder container has strong integrity, which facilitates cleaning.

Preferably, a sealing member is disposed at a lower portion of the cup body. The sealing member can prevent the coffee powder from being scattered by a side wall of the bean grinder container, resulting in waste and contamination of the coffee powder.

Preferably, a maximum outer diameter of the lower portion of the cup body is 40 mm to 200 mm. When the maximum outer diameter of the lower portion of the cup body exceeds 200 mm, the diameter of the bean grinder container is too large, and the coffee powder tends to be scattered between the grinding disc and the cup body, which is adverse to cleaning; and when the maximum outer diameter of the lower portion of the cup body is less than 40 mm, the connection assembly is too small, and it is easy to fix the grinding disc unstably, resulting in insufficient grinding precision.

Preferably, a cup cavity is disposed at an upper portion in the cup body, a relatively sealed grinding channel is disposed at a lower portion of the cup cavity, and the grinding channel is in communication with the grinding disc. The grinding channel below the cup cavity is relatively sealed, so that the coffee powder or particles ground in the grinding disc can be prevented from remaining in the grinding channel or related components.

More preferably, a bottom door is disposed in the grinding channel, a control mechanism is disposed in the cup body, a switch is disposed on a side wall of the cup body, and the switch controls opening and closing of the bottom door by using the control mechanism. The bottom door may be manually controlled by the switch, or may be automatically controlled. The bottom door can prevent coffee beans from leaking down before the bean grinder container is assembled to the bean grinder main machine. The closing and opening of the bottom door are controlled by the switch, so that the bottom door is opened by the control mechanism before or at the same time when the bean grinder container is assembled to the bean grinder main machine.

Another objective of the present invention is to provide a bean grinder, so as to solve a technical problem that the bean grinder is difficult to clean.

To achieve the foregoing objective, a technical solution used in the present invention is to provide a bean grinder, including a bean grinder main machine and any one of the foregoing bean grinder containers, where a lower portion of the bean grinder container is in butt joint with the bean grinder main machine and is detachably connected to the bean grinder main machine.

According to the bean grinder of the present invention, the bean grinder container and the grinding disc can be directly detached from above the bean grinder main machine together, and the bean grinder container and the grinding disc can be cleaned together, thus reducing the number of detached parts, and facilitating cleaning of the bean grinder container and the grinding disc.

Another objective of the present invention is to provide a coffee machine, so as to solve a technical problem that the bean grinder is difficult to clean.

To achieve the foregoing objective, a technical solution used in the present invention is to provide a coffee machine, including any one of the above bean grinders.

According to the coffee machine of the present invention, when cleaning the bean grinder, the bean grinder container and the grinding disc can be directly removed from the bean grinder main machine together, thereby facilitating cleaning.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.

Where:
FIG. 1 is a schematic diagram of an exploded sectional structure of a bean grinder 1000 according to an embodiment of the present invention;
FIG. 2 is a schematic diagram of a sectional structure of a bean grinder container 1100 according to an embodiment of the present invention;
FIG. 3 is a schematic structural diagram of a bottom door 1160 according to an embodiment of the present invention;
FIG. 4 is a schematic structural diagram of a bean grinder container 1100 according to an embodiment of the present invention;
FIG. 5 is a schematic diagram of a top-view structure of a bean grinder main machine 1200 according to an embodiment of the present invention;
FIG. 6 is a schematic structural diagram of a coffee machine 20000 according to another embodiment of the present invention; and
FIG. 7 is a side sectional view of a coffee machine monomer 200 according to another embodiment of the present invention.

Reference numerals in the drawings:
1000, 2000 - bean grinder;
1100 - bean grinder container;
1110 - cup body;
1111 - cup cavity;
1112 - grinding channel;
1120 - grinding disc;
1121 - grinding rib;
1130 - connection assembly;
1140 - adjusting mechanism;
1150 - sealing member;
1160 - bottom door;
1161 -switch;
1162 - clamp hook;
1170 - bottom door bracket;
1180 - cup bottom;
1200 - bean grinder main machine;
1210 - clamp rib;
20000 - coffee machine;
200 - coffee machine monomer;
210 - water tank;
220 - heating bin;
230 - water pump;
240 - coffee barrel;
250 - powder receiving barrel.

### DETAILED DESCRIPTION OF THE EMBODIMENTS

The technical solutions of the embodiments of the present invention are clearly and completely described below with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

It should be noted that, when an element is described to be "fixed to" or "disposed on" another element, it may be directly positioned on another element or indirectly positioned on another element. When an element is described to be "connected to" another element, it may be directly connected to another element or indirectly connected to another element.

It should be noted that, the orientations or positional relationships indicated by the terms "length", "width", "up", "down", "front", "back", "left", "right", "vertical", "horizontal", "top", "bottom", "inside", "outside", etc. are based on those shown in the accompanying drawings, intended only for the convenience of describing the present invention and for simplifying the description, and not intended to indicate or imply that the referred apparatus or element must be provided with a particular orientation or constructed and operated with a particular orientation, therefore not allowed to be construed as a limitation of the present invention.

In addition, the terms "first" and "second" are merely intended for a purpose of description, and shall not be understood as an indication or implication of relative importance or an implicit indication of the number of the indicated technical features. Therefore, a feature limited by "first" or "second" may explicitly or implicitly include one or more features. In the description of the present invention, the meaning of "plurality" is at least two, unless otherwise specifically defined.

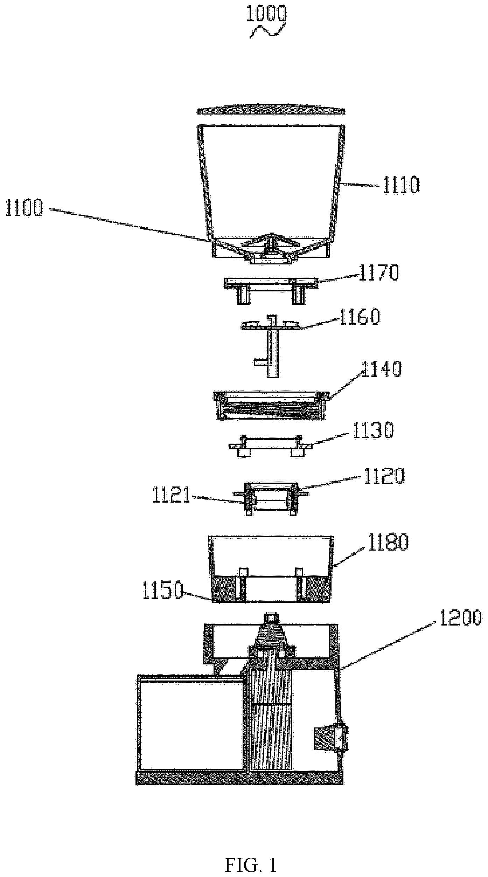

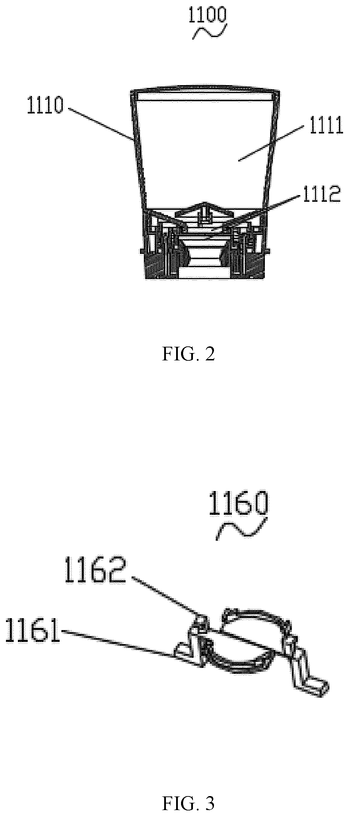

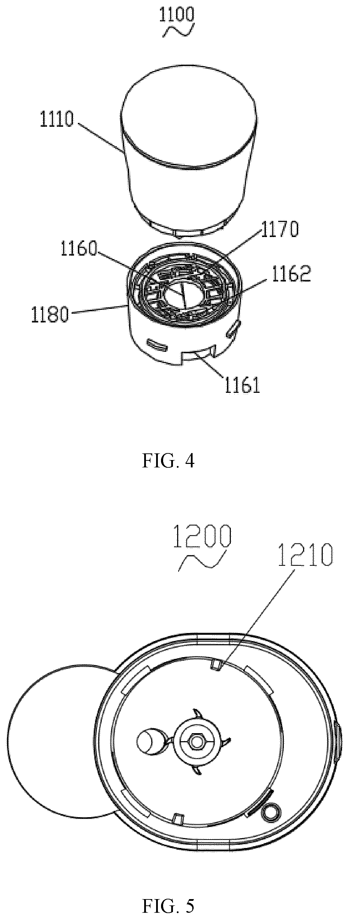

As shown in FIG. 1 to FIG. 5, FIG. 1 is a schematic diagram of an exploded sectional structure of a bean grinder 1000 according to an embodiment of the present invention; FIG. 2 is a schematic diagram of a sectional structure of a bean grinder container 1100 according to an embodiment of the present invention; FIG. 3 is a schematic structural diagram of a bottom door 1160 according to an embodiment of the present invention; FIG. 4 is a schematic structural diagram of a bean grinder container 1100 according to an embodiment of the present invention; and FIG. 5 is a schematic diagram of a top-view structure of a bean grinder main machine 1200 according to an embodiment of the present invention.

As shown in FIG. 1, this embodiment discloses a bean grinder 1000, including a bean grinder container 1100 and a bean grinder main machine 1200. The bean grinder container 1100 is detachably connected to the bean grinder main machine 1200.

As shown in FIG. 1 and FIG. 2, the bean grinder container 1100 includes a cup body 1110 and a cup bottom 1180. The cup body 1110 and the cup bottom 1180 are fixedly connected through a screw, but are relatively rotatable. A connection assembly 1130 and a grinding disc 1120 are disposed below the cup body 1110. The grinding disc 1120 is of an annular structure, and a grinding rib 1121 is disposed on an inner surface of the grinding disc. The connection assembly 1130 is fixedly connected to the cup bottom 1180 through the screw, and the connection assembly 1130 is slidably connected to the grinding disc 1120 and provides a sliding space for the grinding disc 1120. An adjusting mechanism 1140 is further disposed below the cup body 1110, and the adjusting mechanism 1140 is in a threaded connection with the grinding disc 1120. The grinding disc 1120 can be controlled to move up and down along a sliding track provided by the connection assembly 1130 by rotating the adjusting mechanism 1140, so as to control the fineness of the grinding powder. The adjusting mechanism 1140 is fixedly connected to the cup body 1110 through the screw. The cup body 1110 and the cup bottom 1180 are fixedly and rotatably connected through the connection assembly 1130, the grinding disc 1120, the adjusting mechanism 1140, and the screw. The grinding disc 1120 can be removed from below the cup body 1110 by detaching the cup bottom 1180. A removal handle is formed at a protruding edge below the grinding disc 1120, so as to prevent a finger from being cut by the sharp grinding rib 1121 during removal.

As shown in FIG. 2, a cup cavity 1111 is disposed in the cup body 1110 for accommodating coffee beans. A relatively sealed grinding channel 1112 is connected to a lower portion of the cup cavity 1111, and the grinding channel 1112 is in communication with the grinding disc 1120. As shown in FIG. 3 and FIG. 4, a bottom door 1160 is disposed in the grinding channel 1112, and the bottom door 1160 is located above the grinding disc 1120. A switch 1161 is connected to a side face of the bottom door 1160, and the switch 1161 extends to a side wall of the cup bottom 1180. A clamp hook 1162 is disposed above the bottom door 1160, and a bottom door bracket 1170 is fixed in the cup bottom 1180. The clamp hook 1162 is connected to the bottom door bracket 1170 through a spring, so that automatic closing of the bottom door 1160 can be controlled. A side arm of the bottom door 1160, the switch 1161, the clamp hook 1162, and the bottom door bracket 1170 jointly constitute a control mechanism of the bottom door 1160. As shown in FIG. 5, a clamp rib 1210 is disposed on a side wall of the bean grinder main machine 1200, and is used for toggling the switch 1161, so that when the bean grinder container 1100 is rotatably assembled with the bean grinder main machine 1200, the clamp rib 1210 toggles the switch 1161 to control the bottom door 1160 to open.

In another embodiment of the present invention, the switch 1161 can be opened and closed by means of manual control.

A sealing member 1150 is disposed at a lower portion of the cup bottom 1180. When the bean grinder container 1100 is rotatably assembled with the bean grinder main machine 1200, the sealing member 1150 is closely attached to the bean grinder main machine 1200 to prevent coffee powder from spilling.

In this embodiment, a maximum cross-sectional size of the cup bottom 1180 is 150 mm. In another two embodiments of the present invention, maximum cross-sectional sizes of the cup bottom 1180 are 40 mm and 200 mm, respectively.

According to the bean grinder 1000 in this embodiment, when cleaning is performed, the bean grinder container 1100 is easily removed from the bean grinder main machine 1200. In this case, the grinding disc 1120 is also removed together with the bean grinder container 1100, so that the bean grinder container 1100 and the grinding disc 1120 are cleaned conveniently and simply. In addition, the bean grinder main machine 1200 is also easy to clean because the grinding disc 1120 has been removed there from.

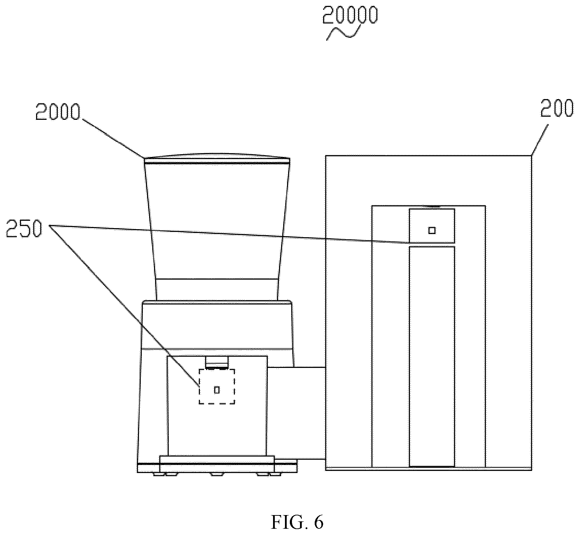

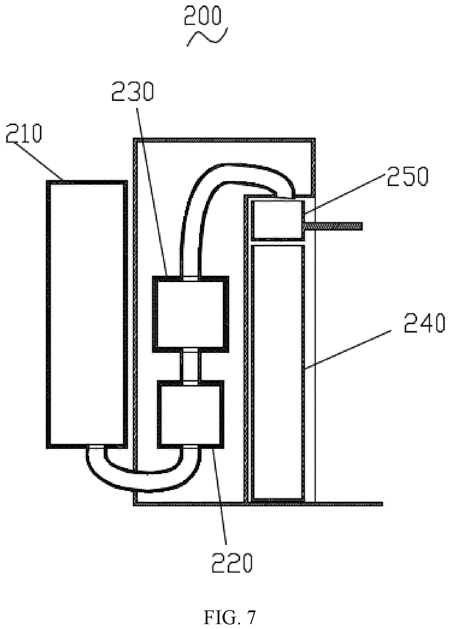

As shown in FIG. 6 and FIG. 7, FIG. 6 is a schematic structural diagram of a coffee machine 20000 according to another embodiment of the present invention; and FIG. 7 is a side sectional view of a coffee machine monomer 200 according to another embodiment of the present invention.

This embodiment discloses a coffee machine 20000, including a bean grinder 2000 and a coffee machine monomer 200. A structure of the bean grinder 2000 is basically the same as that of the bean grinder in the foregoing embodiment.

The coffee machine monomer 200 includes a water tank 210, a heating bin 220, a water pump 230, a coffee barrel 240, and a powder receiving barrel 250. The water tank 210 is connected to the heating bin 220 through a water pipe, the heating bin 220 is connected to the water pump 230 through the water pipe, and the water pump 230 is connected to a water outlet through the water pipe. The powder receiving barrel 250 is located at a position of the water outlet, and is detachably connected to the coffee machine monomer 200. The coffee barrel 240 is disposed below the powder receiving barrel 250 for receiving coffee.

When the coffee machine 20000 works, bean grinding is first performed by the bean grinder 2000, the powder receiving barrel 250 is moved below a discharge channel of the bean grinder 2000, and after the coffee powder is received, the powder receiving barrel is mounted on the coffee machine monomer 200, and then the coffee machine monomer 200 is started to brew the coffee.

According to the coffee machine 20000 of the present invention, an easy-cleaning effect of the bean grinder 2000 is basically the same as that of the bean grinder in the foregoing embodiment of the present invention.

What is disclosed above is merely preferred embodiments of the present invention, and certainly is not intended to limit the protection scope of the present invention. Therefore, any equivalent modifications made in accordance with the claims of the present invention shall fall within the scope of the present invention.

## Claims

1. A bean grinder container, comprising a cup body and a grinding disc, wherein the grinding disc is of a hollow structure, a grinding rib is disposed on an inner wall of the grinding disc, a connection assembly is disposed below the cup body, the connection assembly is fixed below the cup body, and the grinding disc is fixedly connected to the connection assembly.

2. The bean grinder container according to claim 1, wherein the grinding disc is detachably connected to the connection assembly.

3. The bean grinder container according to claim 2, wherein the grinding disc is removed from the cup body from below.

4. The bean grinder container according to claim 3, wherein a detachable handle is disposed below the grinding disc.

5. The bean grinder container according to claim 1, wherein the connection assembly comprises an adjusting mechanism, and the adjusting mechanism controls the grinding disc to move up and down relative to the cup body.

6. The bean grinder container according to claim 1, wherein a sealing member is disposed at a lower portion of the cup body.

7. The bean grinder container according to claim 1, wherein a maximum outer diameter of the lower portion of the cup body is 40 mm to 200 mm.

8. The bean grinder container according to claim 1, wherein a cup cavity is disposed at an upper portion in the cup body, a relatively sealed grinding channel is disposed at a lower portion of the cup cavity, and the grinding channel is in communication with the grinding disc.

9. The bean grinder container according to claim 8, wherein a bottom door is disposed in the grinding channel, a control mechanism is disposed in the cup body, a switch is disposed on a side wall of the cup body, and the switch controls opening and closing of the bottom door by using the control mechanism.

10. A bean grinder, comprising a bean grinder main machine and the bean grinder container according to any one of claims 1 to 9, wherein a lower portion of the bean grinder container is in butt joint with the bean grinder main machine and is detachably connected to the bean grinder main machine.

11. A coffee machine, comprising the bean grinder according to claim 10.
